# EUROPÄISCHE PATENTANMELDUNG

(11) **EP 4 644 187 A1**
(43) Veröffentlichungstag der Anmeldung: **05.11.2025**
(21) Anmeldenummer: 25173419.0
(22) Anmeldetag: 29.04.2025
(51) Int. Cl.: B60R 13/02, B29C 33/12, B29C 65/14, B29C 65/78, B29C 65/00, B32B 38/18, B29L 31/30

(54) **VERFAHREN ZUM ABDECKEN EINES TRÄGERELEMENTS MIT EINEM DEKORELEMENT UND FORMWERKZEUG**

(30) Priorität: 03.05.2024 DE 102024204160
(71) Anmelder: Faurecia Innenraum Systeme GmbH, 76767 Hagenbach (DE)
(72) Erfinder: BERGA, Ruben, 76767 Hagenbach (DE); FERREIRA, Victor, 76767 Hagenbach (DE)
(74) Vertreter: Pfenning, Meinig & Partner mbB

(57) **Zusammenfassung**

Es wird ein Verfahren zum Abdecken eines Trägerelements 1 mit einem Dekorelement 2 vorgeschlagen umfassend die Schritte:
- Bereitstellen eines Dekorelements 2, das einen Positionierungskörper 30, eine erste und eine zweite Dekorschicht 21, 22 sowie eine mit dem Positionierungskörper 30 gekoppelte Verbindungsschicht 40 umfasst, wobei mindestens ein Ende 41, 42 der Verbindungsschicht 40 von dem Positionierungskörper 30 absteht und der Positionierungskörper 30 auf einer jeweils ersten Seite 21A, 22A der ersten und zweiten Dekorschicht 21, 22 angeordnet ist;
- Anordnen des Dekorelements 2 auf einer ersten Formwerkzeughälfte 110 eines Formwerkzeugs 100 derart, dass der mit der Verbindungsschicht 40 gekoppelte Positionierungskörper 30 in einer Aussparung 130 der ersten Formwerkzeughälfte 110 aufgenommen ist
- Anordnen eines Trägerelements 1 auf einer zweiten Formwerkzeughälfte 120 des Formwerkzeugs 100;
- Zusammenführen der ersten und der zweiten Formwerkzeughälfte 110, 120 derart, dass das Trägerelement 1 wenigstens bereichsweise durch mindestens eine der beiden Dekorschichten 21, 22 abgedeckt ist;
- Abtrennen des Endes 41, 42 der Verbindungsschicht 40 von dem mit der Verbindungsschicht 40 gekoppelten Positionierungskörper 30 durch Komprimieren der Aussparung 130.

## Beschreibung

Das vorliegende Schutzrecht liegt auf dem Gebiet des Maschinenbaus und insbesondere der Fahrzeugtechnik. Es betrifft ein Verfahren zum Abdecken eines Trägerelements mit einem Dekorelement und ein Formwerkzeug, insbesondere ein Formwerkzeug zum Durchführen des Verfahrens. Das von dem Dekorelement abgedeckte Trägerelement kann dabei als ein Fahrzeuginnenverkleidungsteil vorgesehen sein.

Aus DE 10 2020 204 051 A1 ist ein Verfahren zum Abdecken eines Trägerelements bekannt, bei dem für eine verbesserte Positionierbarkeit zweier Dekorschichten gegenüber dem Träger ein Positionierungskörper verwendet wird, der im Gegensatz zu sonst üblichen Verfahren nicht rückseitig, sondern in vorteilhafter Weise sichtseitig, also z. B. auf einer später von einem Fahrgastinnenraum einsehbaren Seite, angeordnet und über eine Verbindungsschicht mit den Dekorschichten gekoppelt wird. Nach erfolgtem Abdecken des Trägerteils mit den Dekorschichten wird der Positionierungskörper manuell abgetrennt.

Dieses manuelle Abtrennen weist dabei den Nachteil auf, dass das Verfahren anfälliger für Produktionsfehler und Produktionsvarianzen, also z. B. für zumindest ästhetisch nicht zufriedenstellende Ergebnisse werden kann.

Vor diesem Hintergrund liegt der vorliegenden Erfindung die Aufgabe zugrunde, ein alternatives und/oder verbessertes Verfahren zum Abdecken eines Trägerelements mit einem Dekorelement und ein alternatives und/oder verbessertes Formwerkzeug vorzuschlagen, wobei die Verbesserung insbesondere darin bestehen kann, dass bei leicht zu erzielender Reproduzierbarkeit Produktionsfehler minimiert werden.

Erfindungsgemäß wird diese Aufgabe durch ein Verfahren und ein Formwerkzeug mit den Merkmalen der entsprechenden unabhängigen Ansprüche gelöst. Mögliche Ausgestaltungen und Weiterentwicklungen ergeben sich aus den Unteransprüchen und der nachfolgenden Beschreibung.

Das vorgeschlagenen Verfahren zum Abdecken eines Trägerelements mit einem Dekorelement umfasst die Schritte:
- Bereitstellen eines Dekorelements umfassend einen Positionierungskörper, eine erste Dekorschicht, eine zweite Dekorschicht und eine Verbindungsschicht, wobei die Verbindungsschicht mit dem Positionierungskörper derart gekoppelt ist, dass mindestens ein Ende der Verbindungsschicht von dem Positionierungskörper absteht, und wobei das Ende derart zwischen gegenüberliegenden jeweils ersten Abschnitten der ersten und der zweiten Dekorschicht angeordnet und mit diesen ersten Abschnitten gekoppelt ist, dass der Positionierungskörper auf einer jeweils ersten Seite der ersten und der zweiten Dekorschicht angeordnet ist;
- Anordnen des Dekorelements auf einer ersten Formwerkzeughälfte eines Formwerkzeugs derart, dass der mit der Verbindungsschicht gekoppelte Positionierungskörper in einer Aussparung der ersten Formwerkzeughälfte aufgenommen ist;
- Anordnen eines Trägerelements auf einer zweiten Formwerkzeughälfte des Formwerkzeugs;
- Zusammenführen der ersten und der zweiten Formwerkzeughälfte derart, dass das Trägerelement an einer jeweils zweiten Seite der ersten und der zweiten Dekorschicht angeordnet ist, die der jeweils ersten Seite der ersten und der zweiten Dekorschicht abgewandt ist, sodass das Trägerelement wenigstens bereichsweise durch mindestens eine der beiden Dekorschichten abgedeckt ist;
- Abtrennen des Endes der Verbindungsschicht von dem mit der Verbindungsschicht gekoppelten Positionierungskörper durch Komprimieren der Aussparung.

Da das Abtrennen des Endes der Verbindungsschicht von dem mit der Verbindungsschicht gekoppelten Positionierungskörper durch ein Komprimieren einer in der ersten Formwerkzeughälfte ausgebildeten Aussparung erfolgt, weist das Verfahren einen besonders hohen Grad der Reproduzierbarkeit bei hoher Produktqualität auf.

Beim Komprimieren wird das Volumen der Aussparung derart verkleinert, dass der Positionierungskörper und die mit dem Positionierungskörper gekoppelte Verbindungsschicht an ihrem Ende zusammengedrückt werden, bis das Ende der Verbindungsschicht von dem mit der Verbindungsschicht gekoppelten Positionierungskörper abgetrennt wird. Im Resultat kann das Abtrennen durch ein Abkneifen der Verbindungsschicht von dem Positionierungskörper erfolgen.

Mit dem Begriff gekoppelt kann vorliegend ein unmittelbares aneinander Anliegen zweier Elemente und/oder eine Verbindung dieser Elemente, insbesondere eine feste Verbindung, beispielsweise durch Kleben, Klemmen, Vernähen oder ähnliches, gemeint sein.

Das Abtrennen des Endes der Verbindungsschicht von dem mit der Verbindungsschicht gekoppelten Positionierungskörper kann zusätzlich durch ein Auseinanderführen der ersten und der zweiten Formwerkzeughälfte erfolgen. Das Komprimieren der Aussparung kann dabei vor dem Auseinanderführen der ersten und der zweiten Formwerkzeughälfte erfolgen oder beginnen. Sofern der Positionierungskörper bereits vor dem Komprimieren fest, d.h. kraft- und/oder formschlüssig, in der Aussparung angeordnet ist, können alternativ das Komprimieren und das Auseinanderführen gleichzeitig beginnen. Beim Auseinanderführen ist das mit dem Dekorelement wenigstens bereichsweise abgedeckte Trägerelement auf der zweiten Formwerkzeughälfte angeordnet.

Das Komprimieren der Aussparung kann ein Verschließen, insbesondere ein vollständiges Verschließen, der Aussparung zwischen dem Positionierungskörper und der ersten und der zweiten Dekorschicht umfassen. Im Resultat kann der Positionierungskörper vollständig von der Aussparung umschlossen werden. Das Verschließen kann in Richtung der Verbindungsschicht, insbesondere am abstehenden Ende, erfolgen.

Das Komprimieren der Aussparung kann mittels eines beweglichen Komprimierelements, insbesondere mittels wenigstens zwei beweglicher Komprimierelemente, innerhalb der Aussparung erfolgen. Die Bewegung des beweglichen Komprimierelements oder der beweglichen Komprimierelemente kann in Richtung der Verbindungsschicht, insbesondere am abstehenden Ende, erfolgen. So können z. B. zum Komprimieren der Aussparung einander gegenüberliegende Komprimierelemente, z. B. Wände und/oder Wandelemente, der Aussparung aufeinander zubewegt werden. Es kann vorgesehen sein, dass zwei einander gegenüberliegende Komprimierelemente relativ zur Verbindungsschicht zum Komprimieren der Aussparung symmetrisch, d. h. während der Bewegung stets äquidistant zur Verbindungsschicht angeordnet, aufeinander zubewegt werden. Sofern die Aussparung z. B. als längliche Nut ausgebildet und optional auch der Positionierungskörper ein länglicher und seiner Länge nach in der Nut aufgenommener Körper ist, kann die Bewegung der Komprimierelemente senkrecht zur Längsrichtung der Nut erfolgen. Alternativ oder zusätzlich zu einer translatorischen Beweglichkeit der Komprimierelemente, kann diese auch ein Kippen, insbesondere in Richtung der Verbindungsschicht, umfassen. Die Komprimierelemente können zum Positionierungskörper und/oder zur Verbindungsschicht gewandte Vorsprünge, insbesondere zwischen dem Positionierungskörper und der ersten und der zweiten Dekorschicht angeordnete Vorsprünge, umfassen. Die Vorsprünge können dazu ausgebildet sein, das Verschließen der Aussparung bereitzustellen. Die Vorsprünge können zur Verbindungsschicht, insbesondere am abstehenden Ende, hin spitz zulaufen.

Ferner kann das Verfahren den zusätzlichen Schritt eines Erhitzens des abgetrennten Endes, also des von dem Positionierungskörper abgetrennten und zwischen der ersten und der zweiten Dekorschicht angeordneten Endes der Verbindungsschicht, derart umfassen, dass die Verbindungsschicht zumindest teilweise geschmolzen wird. Das Schmelzen kann dabei insbesondere im Bereich der jeweils ersten Seiten der ersten und der zweiten Dekorschicht erfolgen und insbesondere derart erfolgen, dass die Verbindungsschicht sichtseitig, also in Richtung der jeweils ersten Seiten der ersten und der zweiten Dekorschicht, entfernt wird. Es kann auch ein vollständiges Entfernen der zwischen der ersten und der zweiten Dekorschicht angeordneten Verbindungsschicht durch Erhitzen und Schmelzen der Verbindungsschicht vorgesehen sein. Das Erhitzen kann nach dem Auseinanderführen oder Öffnen der ersten und der zweiten Formwerkzeughälfte erfolgen, insbesondere während das mit dem Dekorelement wenigstens bereichsweise abgedeckte Trägerelement noch auf der zweiten Formwerkzeughälfte angeordnet ist.

Das Erhitzen des abgetrennten Endes kann mit einer ersten Heizvorrichtung, insbesondere mittels einer beweglichen ersten Heizvorrichtung erfolgen. Die Heizvorrichtung kann beispielsweise eine Heißluftvorrichtung sein. So kann z. B. eine bewegliche Heißluftvorrichtung vorgesehen sein, die nach einem Auseinanderführen oder Öffnen der ersten und der zweiten Formwerkzeughälfte zum abgetrennten Ende der Verbindungsschicht bewegt und/oder entlang diesem bewegt wird und die Verbindungsschicht zumindest teilweise mittels Heißluft geschmolzen wird. Alternativ zu einer Heißluftvorrichtung kann ein Infrarotstrahler, insbesondere ein beweglicher Infrarotstrahler, oder eine ähnliche insbesondere zum lokalen Erhitzen geeignete Vorrichtung verwendet werden.

Es kann dabei zweckmäßig sein, wenn die Verbindungsschicht einen niedrigeren Schmelzpunkt als die erste und die zweite Dekorschicht aufweist. Beispielsweise kann der Schmelzpunkt der Verbindungsschicht weniger als 100 °C, insbesondere 90 °C, betragen, während der Schmelzpunkt der ersten und der zweiten Dekorschicht 100 °C und mehr, insbesondere zwischen 100 °C und 200 °C, betragen kann.

Die Verbindungsschicht kann Thermoplaste, insbesondere Polyolefine und/oder Polyamide, umfassen oder daraus bestehen. Die Verbindungsschicht kann ein Gewebe sein oder ein Gewebe umfassen. Die erste und zweite Dekorschicht können Thermoplaste, insbesondere PVC, umfassen oder daraus bestehen.

Außerdem kann das Verfahren ein Evakuieren des abgetrennten Positionierungskörpers mittels einer Evakuierungsvorrichtung, mit anderen Worten ein automatisches oder halbautomatisches Entfernen des abgetrennten Positionierungskörpers aus der Aussparung, umfassen. Die Evakuierungsvorrichtung kann in die erste Formwerkzeughälfte integriert sein. Das Evakuieren kann z. B. mechanisch durch Greifen, Schieben und/oder Fallen oder pneumatisch durch Absaugen oder Wegblasen des Positionierungskörpers erfolgen. So kann beispielsweise ein mit der Aussparung fluidisch verbundener Evakuierungskanal in der ersten Formwerkzeughälfte vorgesehen sein, über den durch Anlegen eines Unterdruckes der abgetrennte Positionierungskörper abgesaugt wird.

Zusätzlich kann das Verfahren ein Erhitzen des Trägerelements und/oder des Dekorelements umfassen, insbesondere bevor die erste und die zweite Formwerkzeughälfte zusammengeführt werden. Das Erhitzen kann dabei derart erfolgen, dass etwaige Klebstoffschichten und/oder materialschlüssige Verbindungen am Träger- und/oder Dekorelement aktiviert oder reaktiviert werden. Das Erhitzen kann mittels einer zwischen der ersten und der zweiten Formwerkzeughälfte angeordneten oder anordenbaren zweiten Heizvorrichtung, z. B. mittels Heizlampen, erfolgen. Zweckmäßigerweise kann das Verfahren dann auch ein Kühlen, insbesondere ein aktives Kühlen, der ersten und/oder der zweiten Formwerkzeughälfte umfassen, insbesondere nachdem die erste und die zweite Formwerkzeughälfte zusammengeführt wurden.

Es kann vorgesehen sein, dass das Trägerelement und das Dekorelement beim Zusammenführen oder bei einem Schließen der ersten und zweiten Formwerkzeughälften zumindest teilweise miteinander verbunden und/oder das Dekorelement zumindest teilweise an das Trägerelement angeformt wird, ihm also eine Form des Trägerelements und/oder dem Trägerelement und dem Dekorelement die durch einander gegenüberliegender Oberflächen der ersten und zweiten Formwerkzeughälften gebildete Form aufgezwungen wird. Grundsätzlich kann auch vorgesehen sein, dass das Trägerelement vor dem Zusammenführen der ersten und zweiten Formwerkzeughälften auf dem Dekorelement angeordnet wird und erst durch teilweises Zusammenführen der ersten und zweiten Formwerkzeughälften das Trägerelement auch auf der zweiten Formwerkzeughälfte angeordnet wird.

Sofern nicht anders ersichtlich, können das Trägerelement, der Positionierungskörper, die erste und zweite Dekorschicht und/oder die Verbindungsschicht grundsätzlich analog zu den entsprechenden Elementen der Ausführungsformen aus der vorliegend ausdrücklich in Bezug genommenen DE 10 2020 204 051 A1 ausgebildet sein. Insbesondere kann vorgesehen sein, dass die Verbindungsschicht den Positionskörper zumindest teilweise umgibt und derart mit diesem gekoppelt ist, dass zumindest ein oder beide Enden der Verbindungsschicht von dem Positionierungskörper absteht/abstehen. Der Positionierungskörper kann elastisch sein und/oder in Form einer Röhre oder einer anderen, insbesondere für eine form- und/oder kraftschlüssige Positionierung in der Aussparung zweckmäßigen, Form ausgebildet sein. Allerdings kann vorliegend auf etwaige Perforierungen oder Sollbruchstellen in der Verbindungsschicht verzichtet werden, auch wenn diese grundsätzlich möglich sind. Die erste und/oder die zweite Deckschicht können auf ihrer zweiten Seite eine Substratschicht, beispielsweise eine formgebende Stabilisierungsschicht, aufweisen. Auch wird hinsichtlich des vorliegenden Verfahrens - sofern nicht anders ersichtlich, also z. B. in Verbindung mit dem Abtrennen des Endes der Verbindungsschicht - der Inhalt der DE 10 2020 204 051 A1 ausdrücklich in Bezug genommen.

Schließlich wird ein Formwerkzeug vorgeschlagen, insbesondere ein Formwerkzeug zum Durchführen des oben beschriebenen Verfahrens. Das Formwerkzeug umfasst eine erste Formwerkzeughälfte und eine zweite gegenüber der ersten angeordnete oder anordenbare Formwerkzeughälfte, wobei die erste Formwerkzeughälfte eine Aussparung zur Aufnahme eines Positionierungskörpers umfasst. Die Aussparung ist zur zweiten Formwerkzeughälfte hin geöffnet und weist wenigstens ein bewegliches Komprimierelement zum Komprimieren und zumindest teilweisen verschließen der Aussparung auf.

Insbesondere durch die Aussparung mit dem wenigstens einen Komprimierelement zeichnet sich das Formwerkzeug durch einen hohen Grad der Reproduzierbarkeit bei hoher Produktqualität mit dem Formwerkzeug herstellbarer Teile aus.

Das Formwerkzeug kann entsprechend den weiter oben beschriebenen Anführungen ausgebildet sein.

Vorliegend wurden mehrere Ausführungsformen offenbart. Aus der folgenden detaillierten Beschreibung, die drei beispielhafte Ausführungsformen der Erfindung zeigt und beschreibt, werden der Fachperson noch weitere Ausführungsformen der vorliegenden Erfindung ersichtlich. Dementsprechend sind die Zeichnungen und die detaillierte Beschreibung als beispielhaft und nicht einschränkend zu betrachten. Wiederkehrende Merkmale sind in der Figurenbeschreibung mit denselben Bezugszeichen versehen.

Es zeigen
- Fig. 1: eine schematische Darstellung einer Ausführungsform eines Dekorelements in einer Schnittansicht, wie es im Stand der Technik bekannt ist,
- Fig. 2 bis 5: eine schematische Darstellung einer Ausführungsform des erfindungsgemäßen Verfahrens mit einer ersten Variante der Aussparung,
- Fig. 6: eine schematische Detaildarstellung einer zweiten Variante der Aussparung und
- Fig. 7: eine schematische Detaildarstellung einer dritten Variante der Aussparung.

Im Folgenden werden wiederkehrende Merkmale einmalig für alle Figuren beschrieben. Auf einzelnen Figuren wird nur verwiesen, wenn es zweckmäßig ist.

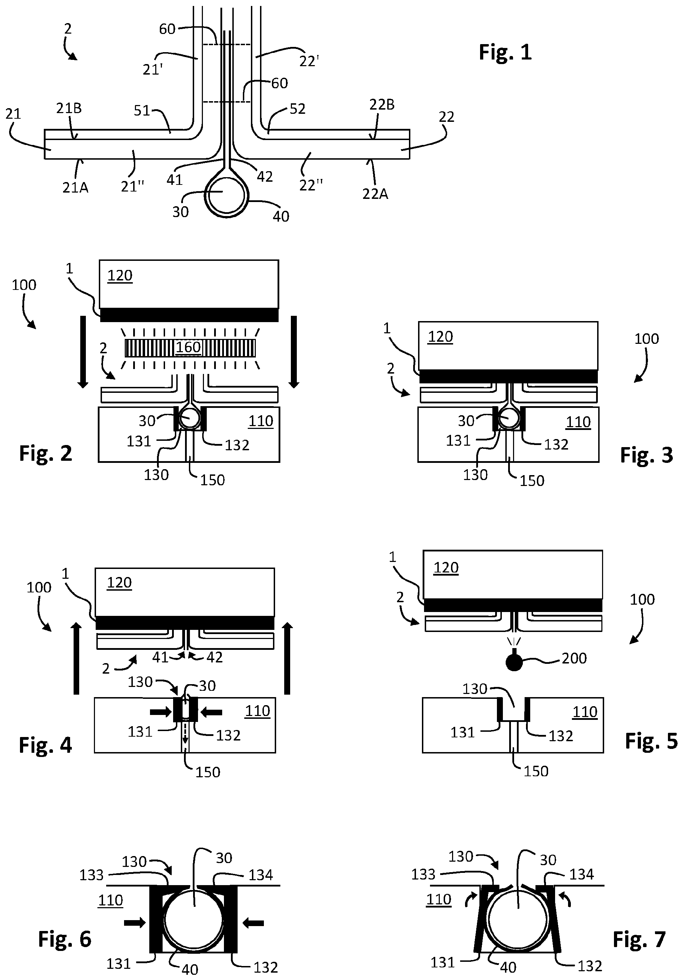

In Fig. 1 ist ein Dekorelement 2 gezeigt, wie es zumindest teilweise aus der DE 10 2020 204 051 A1 bekannt ist. Das Dekorelement 2 umfasst einen Positionierungskörper 30, eine erste Dekorschicht 21, eine zweite Dekorschicht 22 und eine Verbindungsschicht 40, wobei die Verbindungsschicht 40 mit dem Positionierungskörper 30 derart gekoppelt ist, dass zwei Enden 41, 42 der Verbindungsschicht 40 von dem Positionierungskörper 30 abstehen. Die Enden 41, 42 sind derart zwischen gegenüberliegenden jeweils ersten Abschnitten 21', 22' der ersten und der zweiten Dekorschicht 21, 22 angeordnet und mit diesen ersten Abschnitten 21', 22' mittels Verbindungsnähten 60 gekoppelt, dass der Positionierungskörper 30 auf einer jeweils ersten Seite 21A, 22A der ersten und der zweiten Dekorschicht 21, 22 angeordnet ist. Die ersten Seiten 21A, 22A können einer später von einem Fahrgastinnenraum aus einsehbaren Sichtseite eines das Dekorelement 2 umfassenden Fahrzeuginnenverkleidungsteils entsprechen und sind an jeweils zweiten Abschnitten 21", 22" der ersten und zweiten Dekorschicht 21, 22 ausgebildet, wobei die zweiten Abschnitte 21", 22" vorliegend senkrecht zu den ersten Abschnitten 21', 22' verlaufen. Die Verbindungsschicht 40 umgibt vollständig den Positionierungskörper 30. Der Positionierungskörper 30 ist elastisch und in Form einer Röhre ausgebildet. Im Gegensatz zu den Ausführungsbeispielen der DE 10 2020 204 051 A1 weist die Verbindungsschicht 40 keine Sollbruchstelle oder Perforationen auf, auch wenn diese grundsätzlich möglich ist/sind. Die erste und zweite Deckschicht 21, 22 weisen auf ihrer zweiten Seite 21B, 22B, die der jeweiligen ersten Seite 21A, 22A gegenüberliegt, jeweils eine Substratschicht 51, 52 auf, die vorliegend als formgebende Stabilisierungsschicht fungiert.

Gemäß dem in den Fig. 2 bis 5 gezeigte Verfahren wird zunächst das oben beschriebene Dekorelement 2 bereitgestellt und auf einer ersten Formwerkzeughälfte 110 eines Formwerkzeugs 100 derart angeordnet, dass der mit der Verbindungsschicht 40 gekoppelte Positionierungskörper 30 in einer Aussparung 130 der ersten Formwerkzeughälfte 110 aufgenommen ist (Fig. 2). Außerdem wird ein Trägerelement 1 auf einer zweiten Formwerkzeughälfte 120 des Formwerkzeugs 100 angeordnet. Anschließend werden die erste und zweite Formwerkzeughälfte 110, 120 derart zusammengeführt (senkrechte Pfeile in Fig. 2), dass das Trägerelement 1 an der jeweils zweiten Seite 21B, 22B der ersten und der zweiten Dekorschicht 21, 22 angeordnet ist, die der jeweils ersten Seite 21A, 22A der ersten und der zweiten Dekorschicht 21, 22 abgewandt ist, sodass das Trägerelement 1 durch die beiden Dekorschichten 21, 22 abgedeckt ist. Grundsätzlich kann auch vorgesehen sein, dass das Trägerelement 1 vor dem Zusammenführen der ersten und zweiten Formwerkzeughälften 110, 120 auf dem Dekorelement 2 angeordnet wird und erst durch teilweises Zusammenführen der ersten und zweiten Formwerkzeughälften 110, 120 das Trägerelement 1 auch auf der zweiten Formwerkzeughälfte 120 angeordnet wird.

Im hier gezeigten Ausführungsbeispiel werden das Trägerelement 1 und das Dekorelement 2 beim Zusammenführen und Schließen der ersten und zweiten Formwerkzeughälften 110, 120 teilweise miteinander verbunden, wie insbesondere aus den Figuren 4 und 5 ersichtlich wird. Alternativ oder Zusätzlich kann das Dekorelement 2 zumindest teilweise an das Trägerelement 1 angeformt werden, ihm also eine Form des Trägerelements 1 und/oder dem Trägerelement 1 und dem Dekorelement 2 die durch einander gegenüberliegender Oberflächen der ersten und zweiten Formwerkzeughälften 110, 120 gebildete Form aufgezwungen werden. Weitere Möglichkeiten des Anformens von Dekorelement 2 und Träger 1 sind in DE 10 2020 204 051 A1 erläutert. Um das Trägerelement 1 und das Dekorelement 2 miteinander zu verbinden, werden vorliegend das Trägerelement 1 und das Dekorelement 2 mittels einer zwischen der ersten und der zweiten Formwerkzeughälfte 110, 120 angeordneten zweiten Heizvorrichtung 160, z. B. Heizlampen, erhitz - und zwar noch bevor die erste und zweite Formwerkzeughälfte 110, 120 zusammengeführt werden. Durch das Erhitzen können z. B. etwaige Klebstoffschichten und/oder materialschlüssige Verbindungen am Trägerelement 1 und/oder Dekorelement 2 aktiviert oder reaktiviert werden. Entsprechend kann das Verfahren dann auch ein anschließendes Kühlen der ersten und/oder der zweiten Formwerkzeughälfte 110, 120 umfassen.

Weiterhin werden im dargestellten Verfahren die beiden Enden 41, 42 der Verbindungsschicht 40 von dem mit der Verbindungsschicht 40 gekoppelten Positionierungskörper 30 abgetrennt. Dies geschieht durch Komprimieren der Aussparung 130, wie durch die horizontalen Pfeile in Fig. 4 angedeutet. Beim Komprimieren wird das Volumen der Aussparung 130 derart verkleinert, dass der Positionierungskörper 30 und die mit dem Positionierungskörper 30 gekoppelte Verbindungsschicht 40 an ihren Enden 41, 42 zusammengedrückt werden, bis die Enden 41, 42 der Verbindungsschicht 40 von dem mit der Verbindungsschicht 40 gekoppelten Positionierungskörper 30 abgetrennt wird. Im Resultat erfolgt das Abtrennen durch ein Abkneifen der Verbindungsschicht 40 von dem Positionierungskörper 30. Somit weist das Verfahren einen besonders hohen Grad der Reproduzierbarkeit bei hoher Produktqualität auf, wobei sich das Resultierende Teil aus einem mit dem Dekorelement 2 abgedeckten Träger 1 durch einen verbesserten ästhetischen Gesamteindruck auszeichnet. Auch kann das Abtrennen dadurch automatisiert und damit sowohl arbeitssparender als auch schneller erfolgen. Insbesondere kann dadurch zusätzlicher Arbeitsaufwand - alleine durch ein manuelles Abtrennen an sich, aber auch durch zusätzliche in der Verbindungsschicht bereitzustellende Perforationen oder Sollbruchstellen, auf die vorliegend verzichtet werden kann - vermieden werden.

Das Abtrennen der Enden 41, 42 der Verbindungsschicht 40 von dem mit der Verbindungsschicht 40 gekoppelten Positionierungskörper 30 erfolgt zusätzlich durch ein Auseinanderführen der ersten und der zweiten Formwerkzeughälften 110, 120 (senkrechte Pfeile in Fig. 4). Durch die damit zusätzlich auf die Verbindungsschicht 40 wirkende Spannung wird das Abtrennen vereinfacht und kann schneller erfolgen. Je nachdem, wie fest das Positionierungselement 30 z. B. durch Kraft- und/oder Formschluss in der Aussparung 130 angeordnet ist, kann das Auseinanderführen zu einem früheren oder späteren Zeitpunkt des Komprimierens erfolgen. Beim Auseinanderführen ist das mit dem Dekorelement 2 abgedeckte und verbundene Trägerelement 1 auf der zweiten Formwerkzeughälfte 120 angeordnet und mit diesem gekoppelt. Nach dem Abtrennen verbleiben der Positionierungskörper 30 und der Teil der Verbindungsschicht 40, der ursprünglich am Positionierungskörper 30 und um diesen herum anlag, in der Aussparung 130.

Die Figuren 6 und 7 zeigen zwei alternative Ausführungsformen der Aussparung 130 und ihrer Kompression, wie sie in Fig. 4 angedeutet ist. Wie in dem Beispiel der Fig. 6 angedeutet, kann das Komprimieren der Aussparung 130 ein Verschließen, insbesondere ein vollständiges Verschließen, der Aussparung 130 zwischen dem Positionierungskörper 30 und der ersten und der zweiten Dekorschicht 21, 22 umfassen. Im Resultat wird der Positionierungskörper 30 dabei vollständig von der Aussparung 130 umschlossen. Das Verschließen erfolgt in Richtung der Verbindungsschicht 30, insbesondere in dem Bereich, in dem die Enden 41, 42 noch vor dem Abtrennen abstanden.

Wie in Fig. 4 und den Varianten gemäß Fig. 6 und 7 dargestellt, erfolgt das Komprimieren der Aussparung 130 mittels wenigstens zweier beweglicher Komprimierelemente 131 und 132 innerhalb der Aussparung 130. Die Bewegung der beweglichen Komprimierelemente 131, 132 erfolgt jeweils in Richtung der Verbindungsschicht 40 an ihren abstehenden Enden 41, 42, wobei die einander gegenüberliegenden Komprimierelemente 131, 132, die vorliegend jeweils als Wände der Aussparung 130 ausgebildet sind, aufeinander zubewegt werden. Es ist dabei vorgesehen, dass die jeweils zwei einander gegenüberliegenden Komprimierelemente 131, 132 relativ zur Verbindungsschicht 40 zum Komprimieren der Aussparung 130 symmetrisch, d. h. während der Bewegung stets äquidistant zur Verbindungsschicht 40 angeordnet, aufeinander zubewegt werden. Damit wirken in Bewegungsrichtung der Komprimierelemente 131, 132 stets gleiche Kräfte auf die Verbindungsschicht 40 und/oder den Positionierungskörper 30. Vorliegend ist die Aussparung 130 als längliche Nut ausgebildet, die in die Blattebenen hinein verläuft, wobei der Positionierungskörper 30 ein länglicher und seiner Länge nach in der Nut aufgenommener Körper ist. Die Bewegung der Komprimierelemente 131, 132 erfolgt senkrecht zur Längsrichtung dieser Nut. Alternativ oder zusätzlich zu einer translatorischen Beweglichkeit der Komprimierelemente 131, 132, kann diese auch ein Kippen, insbesondere in Richtung der Verbindungsschicht 40, umfassen, wie es beispielhaft in Fig. 7 dargestellt ist. Gemäß Fig. 6 und 7 umfassen die Komprimierelemente 131, 132 zum Positionierungskörper 30 und zur Verbindungsschicht 40 gewandte Vorsprünge 133, 134, die zwischen dem Positionierungskörper 30 und der ersten und der zweiten Dekorschicht 21, 22 angeordnet sind. Die Vorsprünge 133, 134 sind dazu ausgebildet, das Verschließen der Aussparung 130 bereitzustellen. Die Vorsprünge gemäß dem Beispiel der Fig. 6 laufen zur Verbindungsschicht 40 an ihren abstehenden Enden 41, 42 bzw. in dem Bereich, in dem die Enden 41, 42 noch vor dem Abtrennen abstanden, hin spitz zu.

Das Verfahren umfasst gemäß Fig. 5 den zusätzlichen Schritt eines Erhitzens der abgetrennten Enden 41, 42 derart, dass die Verbindungsschicht 40 zumindest teilweise geschmolzen wird. Das Schmelzen kann dabei insbesondere im Bereich der jeweils ersten Seiten 21A, 22A der ersten und der zweiten Dekorschicht 21, 22 erfolgen und insbesondere derart erfolgen, dass die Verbindungsschicht 40 sichtseitig, also in Richtung der jeweils ersten Seiten 21A, 22A, entfernt wird. Das kann insbesondere dann vorteilhaft sein, wenn die Verbindungsschicht 40 aus einem Gewebe besteht und nach dem Abtrennen an den Enden 41, 42 Faserreste hervorstehen. Damit kann aber beispielsweise auch erreicht werden, dass die Enden 41, 42 an den Dekorschichten 21, 22 nicht mehr sichtbar und/oder tastbar sind oder gleichmäßiger erscheinen. Es kann auch ein vollständiges Entfernen der zwischen der ersten und der zweiten Dekorschicht 21, 22 angeordneten Verbindungsschicht 40 durch Erhitzen und Schmelzen der Verbindungsschicht 40 vorgesehen sein. Das Erhitzen erfolgt nach dem Auseinanderführen oder Öffnen der ersten und der zweiten Formwerkzeughälften 110, 120 während das mit dem Dekorelement 2 abgedeckte Trägerelement 1 noch auf der zweiten Formwerkzeughälfte 120 angeordnet ist.

Das Erhitzen der abgetrennten Ende 41, 42 erfolgt mit einer beweglichen ersten Heizvorrichtung 200, die vorliegend eine Heißluftvorrichtung ist. Diese wird nach dem Auseinanderführen der ersten und der zweiten Formwerkzeughälften 121, 122 zu und entlang der abgetrennten Enden 41, 42 der Verbindungsschicht bewegt, wobei die Verbindungsschicht 40 zumindest teilweise mittels Heißluft geschmolzen wird. Alternativ zu einer Heißluftvorrichtung kann ein Infrarotstrahler, z. B. ein beweglicher Infrarotstrahler, oder eine ähnliche zum lokalen Erhitzen geeignete Vorrichtung verwendet werden. Der Vorgang des Erhitzens kann automatisiert ablaufen. Zweckmäßigerweise weist die Verbindungsschicht 40 einen niedrigeren Schmelzpunkt als die erste und die zweite Dekorschicht 21, 22 auf, sodass das Erhitzen für die Dekorschichten 21, 22 zerstörungsfrei erfolgen kann. Beispielsweise kann der Schmelzpunkt der Verbindungsschicht 40 weniger als 100 °C, insbesondere 90 °C, betragen, während der Schmelzpunkt der ersten und der zweiten Dekorschicht 21, 22 100 °C und mehr, insbesondere zwischen 100 °C und 200 °C, beträgt. Die Verbindungsschicht 40 kann Thermoplaste, insbesondere Polyolefine und/oder Polyamide, umfassen oder daraus bestehen. Die Verbindungsschicht 40 kann ein Gewebe sein oder ein Gewebe umfassen. Die erste und zweite Dekorschicht 21, 22 können Thermoplaste, insbesondere PVC, umfassen oder daraus bestehen.

Außerdem umfasst das Verfahren ein Evakuieren des abgetrennten Positionierungskörpers 30 mittels einer Evakuierungsvorrichtung 150. Die Evakuierungsvorrichtung 150 ist in die erste Formwerkzeughälfte 110 integriert. Das Evakuieren kann z. B. mechanisch durch Greifen, Schieben und/oder Fallen oder pneumatisch durch Absaugen oder Wegblasen des Positionierungskörpers 30 erfolgen. So ist vorliegend ein mit der Aussparung 130 fluidisch verbundener Evakuierungskanal 150 in der ersten Formwerkzeughälfte 11 angeordnet, über den durch Anlegen eines Unterdruckes der abgetrennte Positionierungskörper 30 abgesaugt wird. Dieser kann besonders vorteilhaft mit einer verschließbaren Aussparung 130 kombiniert werden, wie sie z. B. in Fig. 6 abgebildet ist. Durch die Evakuierungsvorrichtung 150 wird der Positionierungskörper 30 automatisch entfernt und kann anschließend z. B. recycelt werden.

Die Figuren 2 bis 5 zeigen auch ein Formwerkzeug 100 zum Durchführen des oben beschriebenen Verfahrens. Das Formwerkzeug 100 umfasst eine erste Formwerkzeughälfte 110 und eine zweite gegenüber der ersten angeordnete Formwerkzeughälfte 120, wobei die erste Formwerkzeughälfte 110 eine Aussparung 130 zur Aufnahme des Positionierungskörpers 30 umfasst. Die Aussparung 130 ist zumindest während der in Fig. 2 und 3 schematisch dargestellten Verfahrensschritte zur zweiten Formwerkzeughälfte 120 hin geöffnet und weist wenigstens zwei bewegliche Komprimierelemente 131, 132 zum Komprimieren und zumindest teilweisen verschließen der Aussparung 130 auf. Durch das Formwerkezeug 100 kann das Verfahren gemäß den oben genannten Vorteilen implementiert werden. Weitere vorteilhafte Merkmale des Formwerkzeug 100 und/oder einiger weiterer Ausführungsbeispiele gemäß Fig. 6 und 7 wurden bereits weiter oben beschrieben.

Weitere Ausführungsbeispiele des Verfahrens und des Formwerkzeugs 100 ergeben sich für die Fachperson in naheliegender Weise.

## Patentansprüche

1. Verfahren zum Abdecken eines Trägerelements (1) mit einem Dekorelement (2), umfassend die nachfolgenden Schritte:
- Bereitstellen eines Dekorelements (2) umfassend einen Positionierungskörper (30), eine erste Dekorschicht (21), eine zweite Dekorschicht (22) und eine Verbindungsschicht (40), wobei
die Verbindungsschicht (40) mit dem Positionierungskörper (30) derart gekoppelt ist, dass mindestens ein Ende (41, 42) der Verbindungsschicht (40) von dem Positionierungskörper (40) absteht, und wobei
das Ende (41, 42) derart zwischen gegenüberliegenden jeweils ersten Abschnitten (21', 22') der ersten und der zweiten Dekorschicht (21, 22) angeordnet und mit diesen ersten Abschnitten (21', 22') gekoppelt ist, dass der Positionierungskörper (30) auf einer jeweils ersten Seite (21A, 22A) der ersten und der zweiten Dekorschicht (21, 22) angeordnet ist;
- Anordnen des Dekorelements (2) auf einer ersten Formwerkzeughälfte (110) eines Formwerkzeugs (100) derart, dass der mit der Verbindungsschicht (40) gekoppelte Positionierungskörper (30) in einer Aussparung (130) der ersten Formwerkzeughälfte (110) aufgenommen ist;
- Anordnen eines Trägerelements (1) auf einer zweiten Formwerkzeughälfte (120) des Formwerkzeugs (100);
- Zusammenführen der ersten und der zweiten Formwerkzeughälfte (110, 120) derart, dass das Trägerelement (1) an einer jeweils zweiten Seite (21B, 22B) der ersten und der zweiten Dekorschicht (21, 22) angeordnet ist, die der jeweils ersten Seite (21A, 22A) der ersten und der zweiten Dekorschicht (21, 22) abgewandt ist, sodass das Trägerelement (1) wenigstens bereichsweise durch mindestens eine der beiden Dekorschichten (21, 22) abgedeckt ist;
- Abtrennen des Endes (41, 42) der Verbindungsschicht (40) von dem mit der Verbindungsschicht (40) gekoppelten Positionierungskörper (30) durch Komprimieren der Aussparung (130).

2. Verfahren nach Anspruch 1, wobei das Abtrennen des Endes (41, 42) der Verbindungsschicht (40) von dem mit der Verbindungsschicht (40) gekoppelten Positionierungskörper (30) zusätzlich durch ein Auseinanderführen der ersten und der zweiten Formwerkzeughälfte (110, 120) erfolgt, wobei insbesondere das Komprimieren der Aussparung (130) vor dem Auseinanderführen der ersten und der zweiten Formwerkzeughälfte (110, 120) erfolgt oder beginnt.

3. Verfahren nach Anspruch 1 oder 2, wobei das Komprimieren der Aussparung (130) ein Verschließen, insbesondere ein vollständiges Verschließen, der Aussparung (130) zwischen dem Positionierungskörper (30) und der ersten und der zweiten Dekorschicht (21, 22) umfasst.

4. Verfahren nach einem der vorangehenden Ansprüche, wobei zum Komprimieren der Aussparung (130) zwei einander gegenüberliegende Komprimierelemente (131, 132) relativ zur Verbindungsschicht (40) symmetrisch aufeinander zubewegt werden.

5. Verfahren nach einem der vorangehenden Ansprüche, ferner umfassend ein Erhitzen des abgetrennten Endes (41, 42) derart, dass die Verbindungsschicht (40) zumindest teilweise geschmolzen wird.

6. Verfahren nach einem der vorangehenden Ansprüche, wobei das Erhitzen des abgetrennten Endes (41, 42) mit einer ersten Heizvorrichtung (200), insbesondere einer beweglichen ersten Heizvorrichtung (200), erfolgt.

7. Verfahren nach dem vorangehenden Anspruch, wobei die Verbindungsschicht (40) einen niedrigeren Schmelzpunkt als die erste und die zweite Dekorschicht (21, 22) aufweist, und wobei optional der Schmelzpunkt der Verbindungsschicht (40) weniger als 100 °C, insbesondere 90 °C, beträgt und weiter optional der Schmelzpunkt der ersten und der zweiten Dekorschicht (21, 22) 100 °C und mehr, insbesondere zwischen 100 °C und 200 °C, beträgt.

8. Verfahren nach dem vorangehenden Anspruch, wobei die Verbindungsschicht (40) Thermoplaste, insbesondere Polyolefine und/oder Polyamide, umfasst oder daraus besteht und optional die erste und zweite Dekorschicht (21, 22) Thermoplaste, insbesondere PVC, umfasst oder daraus besteht und wobei, weiterhin optional, die Verbindungsschicht (40) ein Gewebe ist.

9. Verfahren nach einem der vorangehenden Ansprüche, ferner umfassend ein Evakuieren des abgetrennten Positionierungskörpers (30) mittels einer Evakuierungsvorrichtung (150), insbesondere einer in die erste Formwerkzeughälfte (110) integrierten Evakuierungsvorrichtung (150).

10. Formwerkzeug (100), insbesondere Formwerkzeug (100) zum Durchführen des Verfahrens nach einem der vorangehenden Ansprüche, umfassend:
eine erste Formwerkzeughälfte (110) und eine zweite gegenüber der ersten angeordnete Formwerkzeughälfte (120), wobei
die erste Formwerkzeughälfte (110) eine Aussparung (130) zur Aufnahme eines Positionierungskörpers (30) umfasst, und wobei
die Aussparung (130) zur zweiten Formwerkzeughälfte (120) hin geöffnet ist und wenigstens ein bewegliches Komprimierelement (131, 132) zum Komprimieren und zumindest teilweisen verschließen der Aussparung (130) aufweist.
